# EUROPÄISCHE PATENTSCHRIFT

(11) **EP 0 321 728 B1**
(45) Veröffentlichungstag und Bekanntmachung des Hinweises auf die Patenterteilung: **10.03.1993**
(21) Anmeldenummer: 88119599.4
(22) Anmeldetag: 24.11.1988
(51) Int. Cl.: G07F 7/10

(54) **Verfahren und Datenträgeranordnung zur Echtheitserkennung von Speicherchips**
Method and data carrier assembly for validating memory chips
Méthode et disposition de support de données pour l'authentification d'une carte à mémoire

(30) Priorität: 17.12.1987 DE 3742899
(43) Veröffentlichungstag der Anmeldung: 28.06.1989
(73) Patentinhaber: SIEMENS AKTIENGESELLSCHAFT, 80333 München (DE)
(72) Erfinder: Schrenk, Hartmut, Dr., D-8013 Haar (DE)

(56) Entgegenhaltungen:
- EP-A- 0 186 038
- FR-A- 2 471 003

## Beschreibung

Die Erfindung betrifft ein Verfahren nach dem Oberbegriff des Patentanspruches 1 sowie eine Datenträgeranordnung nach dem Oberbegriff des Patentanspruches 8 zur Durchführung des Verfahrens.

Zum bargeldlosen Bezahlen von Waren oder zum Abrechnen von Dienstleistungen und ähnlichem sind datengesteuerte Zahlungssysteme in Form von Datenaustauschsystemen bekannt, die beispielsweise in dem Artikel "Einsatzmöglichkeiten der Chipkarte" von Danneck im "Handbuch der modernen Datenvermittlung", Heft 136, Juli 1987 und in der DE-PS 25 12 935 beschrieben sind. Die dabei verwendeten tragbaren Datenträgeranordnungen (Karten) enthalten als ein wesentliches Element einen nichtflüchtigen elektrischen Datenspeicher, auf den über elektrische Kontakte an der Kartenoberfläche zugegriffen werden kann. Über eine Datenein-/Datenausgabeeinrichtung wird von einer Recheneinrichtung bei jedem Gebrauch auf den Speicherinhalt zugegriffen, der dabei gegebenenfalls geändert wird.

Derartige Datenaustauschsysteme sind z.B. Sicherheits- und Zugriffssysteme, Abrechnungs- oder Registriersysteme und Debit- oder Kreditsysteme. Um eine weite Verbreitung und den häufigen Gebrauch der Karten zu gewährleisten, geben Betreiber solcher Systeme eine Vielzahl von Karten aus und bieten ein weitverzweigtes Netz von Lesegeräten und Rechenanlagen an. Um Mißbräuche der Daten sowie unerlaubte Manipulationen auszuschließen, müssen dabei jedoch hohe Sicherheitsanforderungen an die Datenaustauschsysteme gestellt werden. Besonders bei den tragbaren Datenträgeranordnungen, deren Verbreitung nicht immer kontrollierbar ist, muß eine unerlaubte Manipulation verhindert werden.

Wenn der Käufer einer Karte damit Ansprüche auf Warenausgabe oder Dienstleistungen, wie z.B. die Berechtigung zum Telefonieren an einem mit einer Datenein-/Datenausgabeeinrichtung ausgestatteten Automaten erwirbt, hat der Betreiber des Datenaustauschsystemes zum Zeitpunkt der Kartenbenutzung keine Kenntnis von der Person des Benutzers, so daß jemand, der in betrügerischer Absicht eine Wertkarte elektrisch nachbildet oder simuliert, vom Betreiber nicht erkennt urd nicht belangt werden kann.

Solche Simulationen sind mit Hilfe von frei verkäuflichen Standardrechnern durchführbar, weil die in der tragbaren Datenträgeranordnung gespeicherten Daten abrufbar sind und außerdem der Datenaustausch zwischen der Datenträgeranordnung und der Datenein-/Datenausgabeeinrichtung beobachtbar ist. Wenn aur eine simulierte Karte ein bei der Orginalkarte nicht vorgesehener Löschmodus programmiert wird, kann dieser als "Dauerkarte" eingesetzt werden. Durch den Einsatz solcher simulierter Datenträgeranordnungen kann dem Betreiber der Datenein-/Datenausgabeeinrichtung finanzieller Schaden zugefügt werden.

Für die Verwendung in sogenannten High-End-IC's mit Prozessor- bzw. Rechenwerk ist aus der EP 0 186 038 A2 ein komplexes Verfahren bekannt, bei dem die Rechenzeit eines digitalen Rechenwerkes, d.h. die Anzahl der Rechentakte, die zur Anwendung eines Verschlüsselungsvorganges auf einen Identifikationscode benötigt werden, als Merkmal zur Echtheitserkennung verwendet wird.

Aufgabe der Erfindung ist die Bereitstellung eines Verfahrens zur Echtheitserkennung von Speicherchips, insbesondere in tragbaren Datenträgeranordnungen sowie einer entsprechenden Datenträgeranordnung zur Durchführung eines solchen Verfahrens.

Diese Aufgabe wird bei einem gattungsgemäßen Verfahren nach dem kennzeichnenden Teil des Patentanspruches 1 gelöst.

Eine tragbare Datenträgeranordnung nach dem kennzeichnenden Teil des Patentanspruches 8 ermöglicht die Durchführung dieses Verfahrens.

Günstige Varianten des Verfahrens sowie günstige Ausführungsformen der tragbaren Datenträgeranordnung sind Gegenstand von Unteransprüchen.

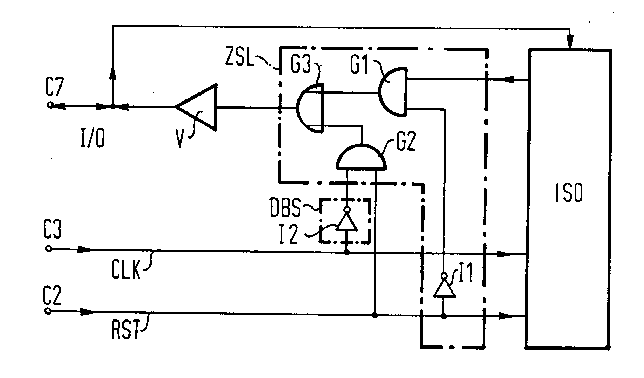

Figur 1 zeigt eine spezielle Ausführungsform einer erfindungsgemäß zusätzlich mit einer Echtheitserkennungs-Schaltung ausgerüsteten tragbaren Datenträgeranordnung.

Ein Verfahren zur Echtheitserkennung einer zu einem Datenaustauschzystem gehörenden tragbaren Datenträgeranordnung, die zumindest eine einen nichtflüchtigen Speicher und dessen Steuer- und Addressierschaltung bildende integrierte Schaltung enthält, wobei bei dem Datenaustauschsystem mittels einer Datenein-/Datenausgabeeinrichtung Daten aus der tragbaren Datenträgeranordnung lesbar bzw. in diese einschreibbar sind und wobei die Datenein-/Datenausgabeeinrichtung zur Versorgung der tragbaren Datenträgeranordnung mit Betriebs- und Steuersignalen vorgesehen ist, ist dadurch realisierbar, daß der tragbaren Datenträgeranordnung von der Datenein-/Datenausgabeeinrichtung neben den bei Datenaustauschsystemen üblichen Daten auch der Echtheitserkennung der tragbaren Datenträgeranordnung dienende Kontrolldaten zuführbar sind, daß die tragbare Datenträgeranordnung durch die Datenein-/Datenausgabeeinrichtung mit Hilfe einer in der tragbaren Datenträgeranordnung enthaltene zusätzliche Schaltlogik ZSL von der normalen Betriebsweise auf Kontroll-Betrieb umschaltbar ist, wobei im Kontroll-Betrieb die von der Datenein-/Datenausgabeeinrichtung zur tragbaren Datenträgeranordnung übertragenen Kontrolldaten an den Eingang eines in der tragbaren Datenträgeranordnung enthaltenen, in Form eines Analogrechners, d.h. einer elektronischen Schaltung, deren Übertragungsfunktion durch den physikalischen Aufbau vorgegeben ist, realisierten Datenbearbeitungs-Schaltungsteiles DBS geschaltet sind und die von diesem Datenbearbeitungs-Schaltungsteil DBS bearbeiteten Kontrolldaten zur Datenein-/Datenausgabeeinrichtung zurückgeführt werden, wobei insbesondere die zur Bearbeitung der Kontrolldaten durch die tragbare Datenträgeranordnung benötigte Zeit als ein Merkmal für die Echtheit der elektronischen Schaltung dieser Datenträgeranordnung vorgesehen sein kann.

Wenn der Datenbearbeitungs-Schaltungsteil DBS, wie beschrieben, ein von seinen Eingangssignaldaten abhängiges Ausgangssignal mit Hilfe einer konkret aufgebauten Schaltung, d.h. nicht mit Hilfe einer programmierbaren Schaltung, liefert, so ist innerhalb bestimmter Toleranzgrenzen die zur Bearbeitung der Eingangssignaldaten erforderliche Zeit durch die Signallaufzeiten innerhalb der einzelnen Schaltungselemente vorgegeben. Mit modernen Logikschaltungen können bei nicht zu großem Daten-Bearbeitungsaufwand Gesamtbearbeitungszeiten von unter 1 µs erreicht werden. Mit softwaregestützten Simulationsschaltungen können derart kurze Bearbeitungszeiten kaum realisiert werden. Mindestens aber unterscheidet sich die Bearbeitungszeit einer Digitalrechner-Schaltung von der einer Analogrechner-Schaltung, d.h. einer konkret aufgebauten, nicht beeinflußbaren Schaltung, wenn beide Schaltungen aus den gleichen Eingangssignaldaten die gleichen Ausgangssignaldaten generieren.

Dadurch, daß tragbare Datenträgeranordnungen, wie sie zur Realisierung erfindungsgemäßer Echtheitserkennungs-Verfahren verwendet werden, eine sehr hohe Kontrolldaten-Übertragungsrate erlauben, die üblicherweise höher als die von programmgestützten Simulationsschaltungen maximal verarbeitbare Datenrate liegt, wird der erfolgreiche Gebrauch von entsprechenden Simulations-Schaltungen bei entsprechend hoher Kontrolldaten-Rate unterbunden.

Da die von dem Datenbearbeitungs-Schaltungsteil DBS benötigte Bearbeitungszeit durch den Aufbau der Schaltung und die verwendete Halbleitertechnologie festgelegt ist, kann selbst eine diskret nachgebaute Datenbearbeitungs-Schaltung trotzdem anhand der unterschiedlichen Kontrollsignal-Bearbeitungszeiten von Orginal- und Nachbau-Schaltung erfolgreich auf ihre Echtheit überprüft werden.

Die Durchführung eines Verfahrens zur Echtheitserkennung einer zu einem Datenaustauschsystem gehörenden tragbaren Datenträgeranordnung wird dadurch ermöglicht, daß die tragbare Datenträgeranordnung eine durch die Datenein-/ Datenausgabeeinrichtung steuerbare zusätzliche Schaltlogik ZSL zum Umschalten zwischen der normalen Betriebsweise und Kontroll-Betrieb und außerdem einen in Form eines Analogrechners realisierten Datenbearbeitungs-Schaltungsteil DBS enthält und daß im Kontroll-Betrieb die von der Datenein-/Datenausgabeeinrichtung empfangenen Kontroll-Daten an den Eingang des Datenbearbeitungs-Schaltungsteiles geschaltet werden.

Als erfindungsgemäß günstig erweist sich, wenn der Datenbearbeitungs-Schaltungsteil ein oder mehrere, insbesondere schnelle Schieberegister enthält, wobei insbesondere durch rückgekoppelte Schieberegister pseudozufällige Ausgangssignale langer Periodizität erzeugt werden.

Eine weitere günstige Ausgestaltungsform erfindungsgemäßer tragbarer Datenträgeranordnungen sieht als Datenbearbeitungs-Schaltungsteil eine Logikschaltung vor, die insbesondere mehrere Eingänge aufweisen kann und beispielsweise eine Exklusiv-ODER-Verknüpfung enthalten kann, wobei die Ausgangsdaten des Datenbearbeitungs-Schaltungsteiles sowohl von den über die Datenein-/Datenausgabeeinrichtung eingegebenen Daten, als auch von Daten, insbesondere von Adreßdaten des nichtflüchtigen Speichers der tragbaren Datenträgeranordnung abhängen können.

Als Merkmal für die Echtheit der tragbaren Datenträgeranordnung bzw. der darin enthaltenen elektronischen Schaltungsanordnung kann erfindungsgemäß sowohl die Fähigkeit der tragbaren Datenträgeranordnung, Kontrolldaten richtig zu bearbeiten, als auch die Fähigkeit der tragbaren Datenträgeranordnung, im richtigen Zeitpunkt und insbesondere mit der richtigen Geschwindigkeit zwischen normaler Betriebsweise und Kontrollbetrieb umzuschalten. Unter richtigem Bearbeiten der Kontrolldaten ist hierbei zu verstehen, daß der Datenein-/Datenausgabeeinrichtung von der tragbaren Datenträgeranordnung die Daten übermittelt werden, die die Datenein-/Datenausgabeeinrichtung aufgrund der von ihr an die tragbare Datenträgeranordnung abgesandten Kontrolldaten erwartet, insbesondere unter Einhaltung einer bestimmten Verzögerungszeit.

Das Umschalten von normaler Betriebsweise auf Kontroll-Betrieb kann sowohl durch Decodierung bestimmter, insbesondere nichtstandard-kompatibler Signalkombinationen, die insbesondere auf der üblichen Datenleitung übertragen werden, vorgenommen werden, als auch durch über einen oder mehrere getrennte Steuereingänge übertragene Umschaltbefehle. Insbesondere kann die Betriebsweise der tragbaren Datenträgeranordnung durch Ändern der Taktfrequenz erzielt werden. Außerdem ist gleichzeitig die normale Betriebsweise und der Kontrollbetrieb möglich.

Wenn das Umschalten zwischen beiden Betriebsarten einer erfindungsgemäßen Datenträgeranordnung mit Hilfe der Steuersignale und Steuereingänge der in Datenträgeranordnungen der gattungsgemäßen Art üblichen Steuer- und Adressierschaltung vorgenommen wird, ist auszuschließen, daß die hierzu erforderliche extrem schnelle Programmumschaltung in programmgesteuerten Simulationsschaltungen realisierbar ist.

Anhand des in der Figur gezeigten einfachen Ausführungsbeispieles einer tragbaren Datenträgeranordnung der erfindungsgemäßen Art wird nachfolgend ein Verfahren zur Echtheitserkennung der integrierten Schaltung einer tragbaren Datenträgeranordnung dargelegt.

Die in der Figur schematisch dargestellte erfindungsgemäße Datenträgeranordnung unterscheidet sich von anderen Datenträgeranordnungen nach dem Oberbegriff des Patentanspruches 8, wie sie in den ISO-Normen 7810 bis 7813 und insbesondere in der ISO-Norm ISO 7816, "identification cards - integrated circuit(s) card with contacts" beschrieben ist, dadurch, daß die tragbare Datenträgeranordnung mindestens über einen ersten Kontakt C7 durch eine bidirektionale Datenleitung I/O, über einen zweiten Kontakt C2 durch eine Rücksetzsignalleitung RST und über einen dritten Kontakt C3 durch eine Taktleitung CLK mit der Datenein-/Datenausgabeeinrichtung verbindbar ist, daß die Rücksetzsignalleitung über eine erste Invertierschaltung I1 an einen Eingang eines ersten UND-Gatters G1 geschaltet ist, daß der andere Eingang dieses UND-Gatters G1 mit dem Datenausgang der in der tragbaren Datenträgeranordnung enthaltenen Schaltungsanordnung ISO der gattungsgemäßen Art, insbesondere deren Speicher verbunden ist, daß der Ausgang des ersten UND-Gatters G1 mit dem Eingang eines ODER-Gatters G3 zusammengeschaltet ist, daß ein anderer Eingang dieses ODER-Gatters G3 an den Ausgang eines zweiten UND-Gatters G2 angeschlossen ist, daß der Ausgang des ODER-Gatters G3 insbesondere über einen Verstärker V mit der bidirektionalen Datenleitung I/O verbunden ist, daß die Rücksetz-Signalleitung an einen Eingang des zweiten UND-Gatters G2 geschaltet ist und der andere Eingang dieses UND-Gatters G2 zur Beaufschlagung mit dem Ausgangssignal des Datenbearbeitungs-Schaltungsteiles DBS vorgesehen ist, daß als sehr einfache Ausführungsform des Datenbearbeitungsschaltungsteiles DBS eine zweite Invertiererschaltung I2 enthalten ist, deren Ausgang mit dem besagten anderen Eingang des zweiten UND-Gatters G2 und deren Eingang mit der Taktleitung CLK verbunden ist.

Bei normaler Betriebsweise wird gemäß ISO-Norm der Adreßzähler des nichtflüchtigen Speichers durch das Rücksetzsignal RST = "1" zurückgesetzt. Mit den nachfolgenden Taktsignalen von üblicherweise maximal 50 kHz erscheinen gemäß ISO-Norm bei einem Rücksetzsignal RST = "0" automatisch die Daten aus vorgegebenen Speicheradressen nacheinander am Datenausgang.

Erfindungsgemäß ist nach der Figur der Datenausgang einer gattungsgemäßen Datenträgeranordnung ISO über einen zusätzlichen Verstärker V an den ersten Kontakt C7 der bidirektionalen Datenleitung I/O geschaltet. Dieser Verstärker V ist in bekannter Weise so dimensioniert, daß auch bei einer erheblich höheren Daten-Übertragungsrate, als der mit der üblichen Taktfrequenz erzielbaren ein eindeutiges Lesen durch die Datenein-/Datenausgabeeinrichtung möglich ist.

Bei einem Rücksetzsignal RST = "0" ist der Datenausgang der in einer gattungsgemäßen Datenträgeranordnung enthaltenen elektronischen Schaltung über das UND-Gatter G1 mit dem an die bidirektionale Datenleitung I/O angeschlossenen ersten Kontakt C7 verbunden und das zweite UND-Gatter G2 schaltet keine Signale an seinen Ausgang durch. Bei einem Rücksetzsignal RST = "1" hingegen schaltet das erste UND-Gatter G1 keine Signale an seinen Ausgang durch, jedoch das zweite UND-Gatter G2 schaltet die an seinem anderen Eingang anstehenden Ausgangssignale des Datenbearbeitungs-Schaltungsteiles, hier das invertiere Taktsignal der Taktleitung CLK an seinen Ausgang und somit an den ersten Kontakt C7 der tragbaren Datenträgeranordnung durch.

Während das Rücksetzsignal mit RST = "1" den standardgemäßen Reset-Zustand aktiviert, gelangen also bearbeitete Kontrolldaten, insbesondere das invertierte Taktsignal, an den Datenausgang der erfindungsgemäßen tragbaren Datenträgeranordnung, während die standardgemäße Datenausgabe über das gesperrte erste UND-Gatter G1 unterbunden ist. Während des Reset-Zustandes ist also im Rahmen der nach der ISO-Norm üblichen Steuersignale über die üblichen Steuereingänge erfindungsgemäß zusätzlich ein Kontroll-Betrieb aktiviert.

Wird das Rücksetzsignal daraufhin auf RST = "0" gesetzt, so wird durch die üblichen Taktimpulse mit einer Frequenz von üblicherweise maximal 50 kHz die standardgemäße "answer to reset" an den ersten Kontakt C7 zur Abfrage durch die Datenein-/Datenausgabeeinrichtung bereitgestellt. Ist diese Rücksetzsignalleitung jedoch aktiviert (RST = "1"), so wird das invertierte Taktsignal, das insbesondere während des Reset-Zustandes eine höhere Taktfrequenz aufweisen kann, an den Datenausgang der tragbaren Datenträgeranordnung geschaltet und kann von der Datenein-/Datenausgabeeinrichtung abgefragt werden.

Die Zeitverzögerung zwischen den Flanken des Taktsignales und den invertierten Flanken des Ausgangssignales kann mit einer unveränderlichen, in Form eines Analogrechners aufgebauten Logikschaltung sehr klein gehalten werden und stellt eine spezifische Kennung der elektronischen Schaltung der echten tragbaren Datenträgeranordnung dar. Eine programmgesteuerte Invertierung kommt mit einer derart kurzen Bearbeitungszeit zumindest bei einer während des Kontrollbetriebes bis in den Grenzbereich erhöhten Taktfrequenz nicht aus.

Eine in der Figur gezeigte tragbare Datenträgeranordnung schaltet bei jeder Aktivierung der Rücksetz-Signalleitung auf Kontrollbetrieb um, wobei die Datenein-/Datenausgabeeinrichtung nicht immer eine Kontrollabfrage durchführen muß. Der Zeitpunkt der Durchführung einer Echtheits-Kontrolle ist beliebig. Selbst wenn zur erfindungsgemäßen Echtheits-Kontrolle mehr Zeit benötigt wird, als für den üblichen Reset-Befehl erforderlich ist, müßte eine programmgesteuerte Simulationsschaltung, beispielsweise mit Hilfe eines Interrupt-Befehles, einen Programmwechsel vornehmen, was bei entsprechend hoher Kontrollsignal-Frequenz nicht möglich ist.

Durch eine Echtheits-Kontrolle zu beliebigen, zufälligen Zeitpunkten wird aufgrund der Vielfalt möglicher Datentausgabe-Impulsfolgen der tragbaren Datenträgeranordnung auch der Versuch einer Vorabsimulation, die Kontrolldaten-Antworten enthalten würde, uninteressant, weil die große Zahl möglicher Impulsfolgen einerseits sowieso den zur Realisierung der Simulationsschaltung benötigten Speicherbedarf über jede Realisierungsmöglichkeit hinaus steigern würde und andererseits eine Kontrolldaten-Antworten enthaltende Datenausgabe-Impulsfolge auch noch, wie ein Schlüssel, genau auf die richtige Eingabedaten-Impulsfolge passen müßte.

## Patentansprüche

1. Verfahren zur Echtheitserkennung einer zu einem Datenaustauschsystem gehörenden tragbaren Datenträgeranordnung, die zumindest eine einen nichtflüchtigen Speicher und dessen Steuer- und Addressierschaltung bildende integrierte Schaltung enthält, wobei bei dem Datenaustauschsystem mittels einer Datenein-/Datenausgabeeinrichtung Daten aus der tragbaren Datenträgeranordnung lesbar bzw. in diese einschreibbar sind und wobei die Datenein-/Datenausgabeeinrichtung zur Versorgung der tragbaren Datenträgeranordnung mit Betriebs- und Steuersignalen vorgesehen ist,
**dadurch gekennzeichnet,**
daß der tragbaren Datenträgeranordnung von der Datenein-/Datenausgabeeinrichtung neben den bei Datenaustauschsystemen üblichen Daten auch der Echtheitserkennung der tragbaren Datenträgeranordnung dienende Kontrolldaten zuführbar sind, daß die tragbare Datenträgeranordnung durch die Datenein-/Datenausgabeeinrichtung mit Hilfe einer in der tragbaren Datenträgeranordnung enthaltenen zusätzlichen Schaltlogik (ZSL) von der normalen Betriebsweise auf Kontroll-Betrieb umschaltbar ist, wobei im Kontroll-Betrieb die von der Datenein-/Datenausgabeeinrichtung zur tragbaren Datenträgeranordnung übertragenen Kontrolldaten an den Eingang eines in der tragbaren Datenträgeranordnung enthaltenen, in Form eines Analogrechners realisierten Datenbearbeitungs-Schaltungsteiles (DBS) geschaltet sind und wobei die von diesem Datenbearbeitungs-Schaltungsteil bearbeiteten Kontrolldaten zur Datenein-/ Datenausgabeeinrichtung zurückgeführt werden, und daß die Bearbeitungszeit der Kontrolldaten durch die tragbare Datenträgeranordnung als ein Merkmal für die Echtheit der elektronischen Schaltung dieser Datenträgeranordnung vorgesehen ist.

2. Verfahren nach Anspruch 1,
**dadurch gekennzeichnet,**
daß von dem Datenbearbeitungs-Schaltungsteil (DBS) in Abhängigkeit von an seinem Eingang anstehenden Kontrolldaten pseudozufällige Ausgangssignale langer Periodizität erzeugt werden.

3. Verfahren nach Anspruch 1 oder 2,
**dadurch gekennzeichnet,**
daß der Datenbearbeitungs-Schaltungsteil (DBS) aus den an einem ersten Eingang eingespeisten Kontrolldaten und aus weiteren, an mindestens einem weiteren Eingang des Datenbearbeitungs-Schaltungsteiles (DBS) eingespeisten Daten ein an die Datenein-/Datenausgabeeinrichtung zu übermittelndes Ausgangssignal bildet.

4. Verfahren nach Anspruch 3,
**dadurch gekennzeichnet,**
daß das Ausgangssignal des Datenbearbeitungs-Schaltungsteiles (DBS) von im nichtflüchtigen Speicher der tragbaren Datenträgeranordnung enthaltenen Daten abhängt.

5. Verfahren nach Anspruch 1, 2, 3 oder 4,
**dadurch gekennzeichnet,**
daß das Umschalten zwischen der normalen Betriebsweise und dem Kontroll-Betrieb durch Decodierung einer bestimmten Signalkombination erfolgt.

6. Verfahren nach Anspruch 1, 2, 3 oder 4,
**dadurch gekennzeichnet,**
daß das Umschalten zwischen der normalen Betriebsweise und dem Kontroll-Betrieb über mindestens einen Steuereingang erfolgt, der nicht zur Übertragung von Daten von oder zum in der tragbaren Datenträgeranordnung enthaltenen Speicher vorgesehen ist.

7. Verfahren nach einem der vorhergehenden Ansprüche,
**dadurch gekennzeichnet,**
daß die Datenein-/Datenausgabeeinrichtung ein Umschalten zwischen normaler Betriebsweise und Kontrollbetrieb zu beliebigen Zeitpunkten eines Datenaustausches veranlaßt.

8. Tragbare Datenträgeranordnung zur Durchführung eines Verfahrens nach Anspruch 1, die mindestens eine einen nichtflüchtigen Speicher und dessen Steuer- und Addressierschaltung bildende integrierte Schaltung enthält, wobei mittels einer Datenein-/Datenausgabeeinrichtung Daten aus der tragbaren Datenträgeranordnung lesbar bzw. in diese einschreibbar sind und wobei die Datenein-/Datenausgabeeinrichtung zur Versorgung der tragbaren Datenträgeranordnung mit Betriebs- und Steuerspannungen vorgesehen ist,
**dadurch gekennzeichnet,**
daß die tragbare Datenträgeranordnung eine durch die Datenein-/Datenausgabeeinrichtung steuerbare zusätzliche Schaltlogik zum Umschalten zwischen der normalen Betriebsweise und Kontroll-Betrieb und außerdem einen in Form eines Analogrechners realisierten Datenbearbeitungs-Schaltungsteil enthält, daß im Kontroll-Betrieb die von der Datenein-/Datenausgabeeinrichtung empfangenen Kontroll-Daten an den Eingang des Datenbearbeitungs-Schaltungsteiles geschaltet werden und daß die vom Datenbearbeitungs-Schaltungsteil (DBS) zur Bearbeitung der Kontrolldaten benötigte Bearbeitungszeit zur Echtheitserkennung der tragbaren Datenträgeranordnung vorgesehen ist.

9. Tragbare Datenträgeranordnung nach Anspruch 7 oder 8,
**gekennzeichnet** durch einen Datenbearbeitungs-Schaltungsteil (DBS) mit mehreren Signaleingängen und einem Signalausgang.

10. Tragbare Datenträgeranordnung nach Anspruch 7, 8 oder 9,
**dadurch gekennzeichnet,**
daß der Datenbearbeitungs-Schaltungsteil (DBS) mindestens ein Schieberegister enthält.

11. Tragbare Datenträgeranordnung nach Anspruch 8 oder 9,
**dadurch gekennzeichnet,**
daß der Datenbearbeitungs-Schaltungsteil (DBS) aus einer Logikschaltung mit fest vorgegebener Funktion besteht.

12. Tragbare Datenträgeranordnung nach Anspruch 9,
**dadurch gekennzeichnet,**
daß mindestens ein Signaleingang eines Datenbearbeitungs-Schaltungsteiles (DBS) mit dem Datenausgang des nichtflüchtigen Speichers der tragbaren Datenträgeranordnung verbunden ist.

13. Tragbare Datenträgeranordnung nach einem der Ansprüche 8, 9, 10, 11 oder 12,
**dadurch gekennzeichnet**,
daß die tragbare Datenträgeranordnung mindestens über einen ersten Kontakt (C7) durch eine bidirektionale Datenleitung (I/O), über einen zweiten Kontakt (C2) durch eine Rücksetzsignalleitung (RST) und über einen dritten Kontakt (C3) durch eine Taktleitung (CLK) mit der Datenein-/Datenausgabeeinrichtung verbindbar ist, daß die Rücksetzsignalleitung über eine erste Invertierschaltung (I1) an einen Eingang eines ersten UND-Gatters (G1) geschaltet ist, daß der andere Eingang dieses UND-Gatters (G1) mit dem Datenausgang der in der tragbaren Datenträgeranordnung enthaltenen Schaltungsanordnung (ISO) der gattungsgemäßen Art, insbesondere deren Speicher, verbunden ist, daß der Ausgang des ersten UND-Gatters (G1) mit dem Eingang eines ODER-Gatters (G3) zusammengeschaltet ist, daß ein anderer Eingang dieses ODER-Gatters (G3) an den Ausgang eines zweiten UND-Gatters (G2) angeschlossen ist, daß der Ausgang des ODER-Gatters (G3) insbesondere über einen Verstärker (V) mit der bidirektionalen Datenleitung (I/O) verbunden ist, daß die Rücksetz-Signalleitung an einen Eingang des zweiten UND-Gatters (G2) geschaltet ist und der andere Eingang dieses UND-Gatters (G2) zur Beaufschlagung mit dem Ausgangssignal des Datenbearbeitungs-Schaltungsteiles (DBS) vorgesehen ist.

14. Tragbare Datenträgeranordnung nach einem der Ansprüche 8 bis 13,
**dadurch gekennzeichnet**,
daß der Datenbearbeitungs-Schaltungsteil (DBS) eine Invertiererschaltung (I2) enthält.

15. Tragbare Datenträgeranordnung nach einem der Ansprüche 1 bis 7,
**dadurch gekennzeichnet**,
und zur Beaufschlagung des Einganges des Datenbearbeitungs-Schaltungsteiles (DBS) ein Kontrollsignal hoher Frequenz vorgesehen ist.

## Claims

1. Method for validating a portable data carrier assembly belonging to a data exchange system, which assembly includes at least one integrated circuit forming a non-volatile memory and a control and addressing circuit thereof, it being possible in the data exchange system for data to be read from the portable data carrier assembly or written to it by means of a data input/data output device and the data input/data output device being provided for supplying the portable data carrier assembly with operating and control signals, characterised in that the portable data carrier assembly can be fed from the data input/data output device check data serving to validate the portable data carrier assembly in addition to the data conventional in data exchange systems, in that the portable data carrier assembly is capable of being switched over from the normal operating mode to check mode by the data input/data output device with the aid an additional switching logic (ZSL) contained in the portable data carrier assembly, the check data transmitted from the data input/data output device to the portable data carrier assembly being switched in check mode to the input of a data processing portion (DBS) contained in the portable data carrier assembly and realised in the form of an analog computer, and the check data processed by this data processing circuit portion being fed back to the data input/data output device, and in that the processing time of the check data is provided by the portable data carrier assembly as a characteristic for the validity of the electronic circuit of this data carrier assembly.

2. Method according to Claim 1, characterised in that pseudo-random output signals of long periodicity are generated by the data processing circuit portion (DBS) as a function of check data present at its input.

3. Method according to Claim 1 or 2, characterised in that the data processing circuit portion (DBS) forms an output signal to be transmitted to the data input/data output device on the basis of the check data fed in at a first input and further data fed in at least one further input of the data processing circuit portion (DBS).

4. Method according to Claim 3, characterised in that the output signal of the data processing circuit portion (DBS) depends on data contained in the non-volatile memory of the portable data carrier assembly.

5. Method according to Claim 1, 2, 3 or 4, characterised in that the switching-over between the normal operating mode and the check mode is performed by decoding a certain signal combination.

6. Method according to Claim 1, 2, 3 or 4, characterised in that the switching-over between the normal operating mode and the check mode is performed via at least one control input which is not provided for transmitting data from or to the memory contained in the portable data carrier assembly.

7. Method according to one of the preceding claims, characterised in that the data input/data output device causes a switching-over between normal operating mode and check mode at arbitrary instants of a data exchange.

8. Portable data carrier assembly for carrying out a method according to Claim 1, which assembly includes at least one integrated circuit forming a non-volatile memory and a control and addressing circuit thereof, it being possible for data to be read from the portable data carrier assembly or written to it by means of a data input/data output device and the data input/data output device being provided for supplying the portable data carrier assembly with operating and control voltages, characterised in that the portable data carrier assembly includes an additional switching logic, which can be controlled by the data input/data output device, for switching over between the normal operating mode and check mode and, furthermore, a data processing circuit portion realised in the form of an analog computer, in that in the check mode the data received by the data input/data output device are switched to the input of the data processing circuit portion and in that the processing time required by the data processing circuit portion (DBS) for processing the check data is provided for validating the portable data carrier assembly.

9. Portable data carrier assembly according to Claim 7 or 8, characterised by a data processing circuit portion (DBS) having a plurality of signal inputs and one signal output.

10. Portable data carrier assembly according to Claim 7, 8 or 9, characterised in that the data processing circuit portion (DBS) includes at least one shift register.

11. Portable data carrier assembly according to Claim 8 or 9, characterised in that the data processing circuit portion (DBS) comprises a logic circuit with a fixedly predetermined function.

12. Portable data carrier assembly according to Claim 9, characterised in that at least one signal input of a data processing circuit portion (DBS) is connected to the data output of the non-volatile memory of the portable data carrier assembly.

13. Portable data carrier assembly according to one Claims 8, 9, 10, 11 or 12, characterised in that the portable data carrier assembly can be connected at least via a first contact (C7) through a bidirectional data line (I/O), via a second contact (C2) through a reset signal line (RST) and via a third contact (C3) through a clock line (CLK) to the data input/data output device, in that the reset signal line is connected via a first inverting circuit (I1) to an input of a first AND gate (G1), in that the other input of this AND gate (G1) is connected to the data output of the circuit assembly (ISO) of the generic type, in particular the memory thereof, contained in the portable data carrier assembly, in that the output of the first AND gate (G1) is interconnected with the input of an OR gate (G3), in that another input of this OR gate (G3) is connected to the output of a second AND gate (G2), in that the output of the OR gate (G3) is connected in particular via an amplifier (V) to the bidirectional data line (I/O), in that the reset signal line is connected to an input of the second AND gate (G2) and the other input of this AND gate (G2) is provided for receiving the output signal of the data processing circuit portion (DBS).

14. Portable data carrier assembly according to one of Claims 8 to 13, characterised in that the data processing circuit portion (DBS) includes an inverter circuit (I2).

15. Portable data carrier assembly according to one of Claims 1 to 7, characterised in that a check signal of high frequency is provided for feeding to the input of the data processing circuit portion (DBS).

## Revendications

1. Procédé d'authentification d'un dispositif de support de données portable qui fait partie d'un système d'échange de données et qui comporte au moins un circuit intégré constituant une mémoire non volatile et son circuit de commande et d'adressage, et dans lequel des données peuvent être lues à partir du dispositif de support de données portable ou mémorisées dans ce dispositif, dans le système d'échange de données, au moyen d'un dispositif d'entrée de données/sortie de données, et selon lequel le dispositif d'entrée de données/sortie de données est prévu pour alimenter le dispositif de support de données portable avec des signaux de service et de commande,
caractérisé par le fait
qu'en plus des données usuelles dans des systèmes d'échange de données, également des données de contrôle utilisées pour l'authentification du dispositif de support de données portable peuvent être envoyées à ce dispositif par le dispositif d'entrée de données/sortie de données, que le dispositif de support de données portable peut être commuté du mode de fonctionnement normal au fonctionnement de contrôle par le dispositif d'entrée de données/sortie de données, à l'aide d'une unité logique supplémentaire de commutation (ZSL), contenue dans le dispositif de support de données portable, et selon lequel, dans le fonctionnement de contrôle, les données de contrôle transmises par le dispositif d'entrée de données/sortie de données au dispositif de support de données portable sont commutées en direction de l'entrée d'un élément de circuit de traitement de données (DBS), qui est contenu dans le dispositif de support de données portable et est réalisé sous la forme d'un calculateur analogique, et dans lequel les données de contrôle traitées par cet élément de circuit de traitement de données, sont renvoyées au dispositif d'entrée de données/de sortie de données, et que le temps de traitement des données de commande par le dispositif de support de données portable est prévu en tant que caractéristique de l'authenticité du circuit électronique de ce dispositif de support de données.

2. Procédé suivant la revendication 1, caractérisé par le fait que l'élément de circuit de données (DBS) produit, en fonction de données de contrôle appliquées à son entrée, des signaux de sortie pseudo-aléatoires possédant une longue périodicité.

3. Procédé suivant la revendication 1 ou 2, caractérisé par le fait que l'élément de circuit de traitement de données (DBS) forme, à partir des données de contrôle introduites d'une première entrée et à partir d'autres données introduites au moins à une autre entrée de l'élément de circuit de traitement de données (DBS), un signal de sortie devant être retransmis au dispositif d'entrée de données/sortie de données.

4. Procédé suivant la revendication 3, caractérisé par le fait que le signal de sortie de l'élément de circuit de traitement de données (DBS) dépend de données contenues dans la mémoire non volatile du dispositif de support de données portable.

5. Procédé suivant la revendication 1, 2, 3 ou 4, caractérisé par le fait que la commutation entre le mode de fonctionnement normal et le fonctionnement de contrôle est réalisée par décodage d'une combinaison déterminée de signaux.

6. Procédé suivant la revendication 1, 2, 3 ou 4, caractérisé par le fait que la commutation entre le mode de fonctionnement normal et le fonctionnement de contrôle est réalisée par l'intermédiaire d'au moins une entrée de commande, qui n'est pas prévue pour la transmission de données en provenance ou en direction de la mémoire contenue dans le dispositif de support de données portable.

7. Procédé suivant l'une des revendications précédentes, caractérisé par le fait que le dispositif d'entrée de données/sortie de données déclenche une commutation entre le mode de fonctionnement normal et le fonctionnement de contrôle à n'importe quel instant d'un échange de données.

8. Dispositif de support de données portable pour la mise en oeuvre du procédé suivant la revendication 1, qui comporte au moins un circuit intégré constituant une mémoire non volatile et son circuit de commande et d'adressage, et dans lequel des données peuvent être lues à partir du dispositif de support de données portable ou être mémorisées dans ce dispositif, dans le système d'échange de données, au moyen d'un dispositif d'entrée/sortie des données, et selon lequel le dispositif d'entrée/sortie de données est prévu pour alimenter le dispositif de support de données portable avec des signaux de service et de commande, caractérisé par le fait que le dispositif de support de données portable comporte une unité logique supplémentaire, qui peut être commandée par le dispositif d'entrée de données/sortie de données pour réaliser la commutation entre le mode de fonctionnement normal et le fonctionnement de contrôle, et, en outre, un élément de circuit de traitement de données réalisé sous la forme d'un calculateur analogique, que dans le fonctionnement de contrôle, les données de contrôle reçues par le dispositif d'entrée de données/sortie de données sont appliquées à l'entrée de l'élément de circuit de traitement de données et que le temps de traitement nécessité par l'élément de circuit de traitement de données (DBS) pour traiter les données de contrôle, est prévu pour l'authentification du dispositif de support de données portable.

9. Dispositif de support de données portable suivant la revendication 7 ou 8, caractérisé par un élément de circuit de traitement de données (DBS) comportant plusieurs entrées de signaux et une sortie des signaux.

10. Dispositif de support de données portable suivant la revendication 7, 8 ou 9, caractérisé par le fait que l'élément de circuit de traitement de données (DBS) comporte au moins un registre à décalage.

11. Dispositif de support de données portable suivant la revendication 8 ou 9, caractérisé par le fait que l'élément de circuit de traitement de données (DBS) est constitué par un circuit logique ayant une fonction prédéterminée de façon fixe.

12. Dispositif de support de données portable suivant la revendication 9, caractérisé par le fait qu'au moins une entrée des signaux d'un élément de circuit de traitement de données (DBS) est raccordée à la sortie de données de la mémoire non volatile du dispositif de support de données portable.

13. Dispositif de support de données portable suivant l'une des revendications 8, 9, 10, 11 ou 12, caractérisé par le fait que le dispositif de support de données portable peut être raccordé au moins par l'intermédiaire d'un premier contact (C7) et au moyen d'une ligne bidirectionnelle de transmission de données (I/O), par l'intermédiaire d'un second contact (C2) au moyen d'une ligne (RST) de transmission de signaux de remise à l'état initial et par l'intermédiaire d'un troisième contact (C3) au moyen d'une ligne de transmission de cadence (CK), au dispositif d'entrée de données/sortie de données, que la ligne de transmission de signaux de remise à zéro est raccordée par l'intermédiaire d'un premier circuit inverseur (I) à une entrée d'une première porte ET (G1), que l'autre entrée de cette porte ET (G1) est raccordée à la sortie de données du montage (ISO) qui est contenue dans le dispositif de support de données portable, notamment la mémoire de ce montage, que la sortie de la première porte ET (G1) est interconnectée à l'entrée d'une porte OU (G3), qu'une autre entrée de cette porte OU (G3) est raccordée à la sortie d'une seconde porte ET (G2), que la sortie de la porte OU (G3) est raccordée notamment par l'intermédiaire d'un amplificateur (V) à la ligne bidirectionnelle de transmission de données (I/O), que la ligne de transmission de signaux de remise à l'état initial est raccordée à une entrée de la seconde porte ET (G2) et que l'autre entrée de cette porte ET (G2) est destinée à être chargée par le signal de sortie de l'élément de circuit de traitement de données (DBS).

14. Dispositif de support de données portable suivant l'une des revendications 8 à 13, caractérisé par le fait que l'élément de circuit de traitement de données (DBS) comporte un circuit inverseur (I2).

15. Dispositif de support de données portable suivant l'une des revendications 1 à 7, caractérisé par le fait que pour le chargement d'une entrée de l'élément de circuit de traitement de données (DBS), il est prévu un signal de contrôle à haute fréquence.
